# EUROPEAN PATENT APPLICATION

(11) **EP 4 333 412 A1**
(43) Date of publication of application: **06.03.2024**
(21) Application number: 23735960.9
(22) Date of filing: 08.05.2023
(51) Int. Cl.: H04M 1/72403, H04M 1/72448, H04M 1/727, G06F 3/0484

(54) **METHOD AND DEVICE FOR DISPLAYING SCREEN OF APPLICATION EXECUTED BY USING SUBSCRIBER IDENTIFICATION MODULE INFORMATION**

(30) Priority: 20.07.2022 KR 20220089836; 30.08.2022 KR 20220109188
(71) Applicant: Samsung Electronics Co., Ltd., Suwon-si, Gyeonggi-do 16677 (KR)
(72) Inventor: WOO, Kwangtaek, Suwon-si Gyeonggi-do 16677 (KR); KIM, Mingyu, Suwon-si Gyeonggi-do 16677 (KR); KIM, Seonghun, Suwon-si Gyeonggi-do 16677 (KR); CHOI, Jaeho, Suwon-si Gyeonggi-do 16677 (KR); AN, Jinwan, Suwon-si Gyeonggi-do 16677 (KR)
(74) Representative: Nederlandsch Octrooibureau
(86) International application number: PCT/KR2023/006186
(87) International publication number: WO 2024/019285

(57) **Abstract**

An electronic device includes a display module including a plurality of areas, a memory configured to store computer-executable instructions, and a processor configured to execute the computer-executable instructions by accessing the memory, in which the computer-executable instructions are configured to, when detecting an execution input for a target application, obtain target subscriber identification module (SIM) information connected to the target application among pieces of SIM information read by the electronic device, display a screen of the target application executed by using the obtained target SIM information in a target area corresponding to the obtained target SIM information among the areas of the display module.

## Description

### BACKGROUND

### 1. Field

The disclosure relates to a method of displaying a screen of an application executed by using at least one of pieces of subscriber identification module information read by an electronic device.

### 2. Description of Related Art

With the development of functions of an electronic device, there has been growing interest in technology for using a subscriber identification module (SIM) for storing various pieces of information of a user. An electronic device may perform short-range communication with another electronic device or a reader by using a SIM through which the electronic device may store various pieces of information. For example, a user may use a SIM, which stores the payment information and personal information of the user in an electronic device, for transportation fee payment, card payment, and various types of user verification only by tagging it to a reader.

A universal integrated circuit card (UICC) is a smart card that is used by being inserted into a mobile communication terminal and may be also referred to as a UICC card. The UICC may include an access control module for accessing a network of a mobile communication service provider. The access control module may include, for example, a universal subscriber identity module (USIM), a SIM, an IP multimedia service identity module (ISIM), and the like. A UICC including a USIM may be also commonly referred to as a USIM card. Similarly, a UICC including a SIM module may be also commonly referred to as a SIM card. In the description below in the present disclosure, the SIM card may be used as having a general meaning of including a UICC card, a USIM card, a UICC including an ISIM, and the like. In other words, a technical application of the SIM card may uniformly apply to a USIM card, an ISIM card, or a general UICC card.

The SIM card may store personal information of a mobile communication subscriber and enable the safe use of mobile communication by performing traffic security key generation and subscriber authentication upon access to a mobile communication network.

At the moment when the present disclosure is proposed, the SIM card is generally manufactured as a card dedicated for a specific mobile communication service provider by request of the mobile communication service provider when manufacturing the card, and the card is released with authentication information for accessing a network of the mobile communication service provider, for example, USIM application and international mobile subscriber identity (IMSI), a K value, an OPc value, and the like, that is included by the card in advance. Accordingly, the manufactured SIM card may be supplied to the mobile communication service provider and then provided to a subscriber by the mobile communication service provider, and if necessary, such management as the installation, modification, and deletion of applications in the UICC may be performed by using technology, such as over the air (OTA) technology. A subscriber may insert the UICC card into their mobile communication terminal and use the network and application services of the mobile communication service provider, and by removing the UICC card from the mobile communication terminal and inserting it to a new mobile communication terminal when changing a terminal, may use the authentication information, the mobile communication phone number, the personal contact list, and the like, which are stored in the UICC card, as they are in the new mobile communication terminal.

In addition, the SIM may be remotely downloaded and installed on the UICC card. In other words, a user may download a SIM of a mobile communication service that the user desires to use onto a UICC card at a desired time. Such a UICC card may also download and install a plurality of SIMs and select and use one of the SIMs. The UICC card may or may not be fixed to a terminal. A UICC that is fixed to a terminal and used may be specifically referred to as an embedded UICC (eUICC), and the eUICC may generally refer to a UICC card that is used by being fixed to the terminal and may remotely download SIMs and select a SIM. UICC cards that may remotely download and select a SIM may be collectively referred to as the eUICC. Accordingly, UICC cards that may be fixed to a terminal among the UICC cards that may remotely download and select a SIM may be collectively referred to as the eUICC. In addition, pieces of SIM module information to be downloaded may be collectively referred to as an eUICC profile.

In embodiments herein, the term UICC may be interchangeably used with the SIM and the term eUICC may be interchangeably used with an embedded SIM (eSIM).

### SUMMARY

The embodiments of the present disclosure may provide a method of displaying a screen of an application executed by using at least one of pieces of subscriber identification module information read by an electronic device.

According to an embodiment, an electronic device includes a display module including a plurality of areas, a memory configured to store computer-executable instructions, and a processor configured to execute the computer-executable instructions by accessing the memory in which the computer-executable instructions are configured to when detecting an execution input for a target application, obtain target subscriber identification module (SIM) information connected to the target application among pieces of SIM information read by the electronic device, and display a screen of the target application executed by using the obtained target SIM information in a target area corresponding to the obtained target SIM information among the areas of the display module.

According to an embodiment, a method of operating an electronic device implemented by a processor includes, when detecting an execution input for a target application, obtaining target SIM information connected to the target application among pieces of SIM information read by the electronic device and displaying a screen of the target application executed by using the obtained target SIM information in a target area corresponding to the obtained target SIM information among a plurality of areas of a display module.

According to embodiments, a screen of an application executed by using at least one of pieces of subscriber identification module information read by an electronic device may be displayed.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device 101 in a network environment 100, according to an embodiment;
FIG. 2A is a diagram illustrating an unfolded state of an electronic device 200, according to an embodiment;
FIG. 2B is a diagram illustrating a folded state of the electronic device 200, according to an embodiment;
FIG. 2C is a perspective view illustrating an example of a fully unfolded state or a partially unfolded, intermediate state of the electronic device 200, according to an embodiment;
FIGS. 3A and 3B are front perspective views illustrating an electronic device 300 in a closed state and an open state, according to an embodiment;
FIGS. 4A and 4B are rear perspective views illustrating the electronic device 300 in a closed state and an open state, according to an embodiment;
FIG. 5 is a flowchart illustrating an operation of displaying a screen of a target application of an electronic device, according to an embodiment;
FIG. 6 is a diagram illustrating an operation of displaying a screen of a target application executed by using pieces of target subscriber identification module (SIM) information of an electronic device, according to an embodiment;
FIG. 7 is a diagram illustrating an operation of displaying a screen of a target application and a screen of another application of an electronic device, according to an embodiment;
FIG. 8 is a diagram illustrating an operation of displaying a screen of a target application when detecting an input of moving the screen of the target application, according to an embodiment;
FIG. 9 is a diagram illustrating an operation of displaying a screen of a target application executed by using target SIM information selected based on an area including a position at which an execution input of an electronic device is detected, according to an embodiment;
FIG. 10 is a diagram illustrating an operation of displaying a home screen for executing an application by using representative SIM information selected from among pieces of target SIM information of an electronic device, according to an embodiment;
FIG. 11 is a diagram illustrating an operation of displaying a screen of an application including a theme corresponding to SIM information of an electronic device, according to an embodiment; and
FIG. 12 is a diagram illustrating an operation of displaying a screen of a target application based on rotation of an electronic device, according to an embodiment.

### DETAILED DESCRIPTION

Hereinafter, embodiments are described in detail with reference to the accompanying drawings. When describing the embodiments with reference to the accompanying drawings, like reference numerals refer to like elements and a repeated description related thereto will be omitted.

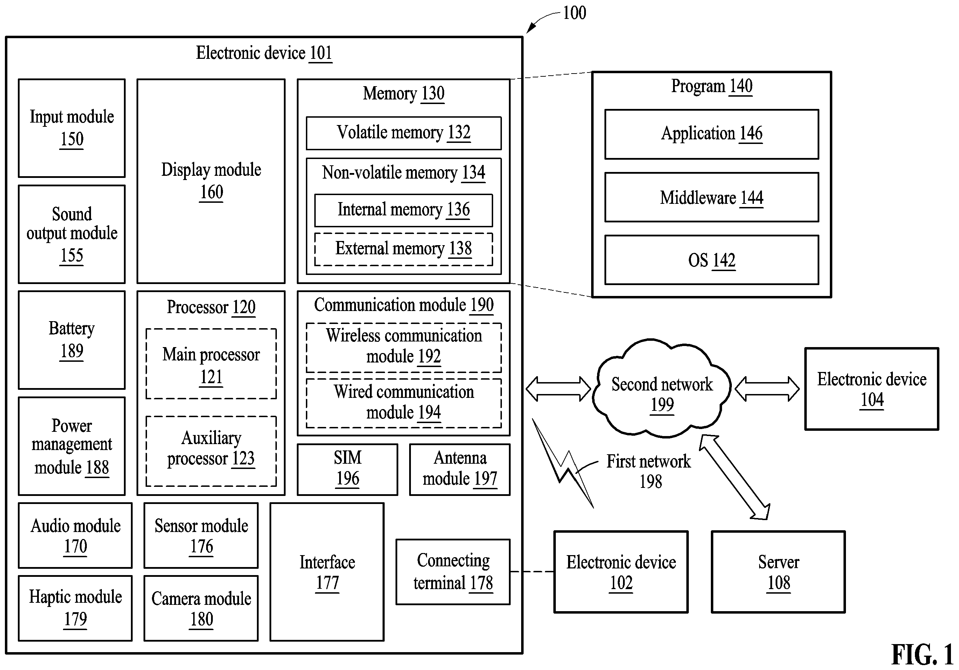

FIG. 1 is a block diagram illustrating an electronic device 101 in a network environment 100, according to an embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence model processing. An artificial intelligence (AI) model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101 and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196. For reference, the communication module may establish communication with a target device (e.g., the electronic device 104) for mirroring display.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed by one or more external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or the service, may request one or more external electronic devices to perform at least portion of the function or the service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, a cloud computing, distributed computing, mobile edge computing (MEC), or client-server computing technology may be used, for example. The electronic device 101 may provide ultra low-latency services using, e.g., distributed computing or MEC. The external electronic device 104 may be a target device with a target display that may output an image. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., smart home, smart city, smart car, or healthcare) based on 5G communication technology or IoT-related technology.

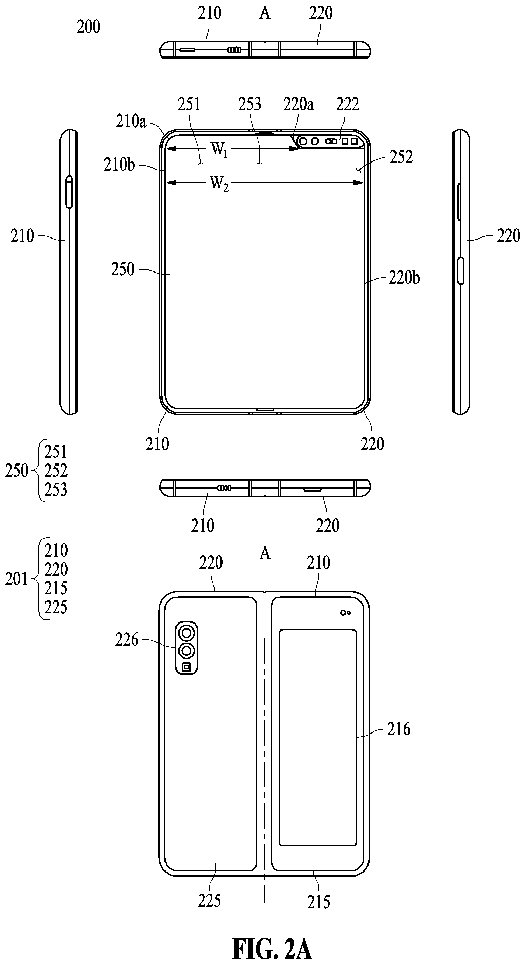

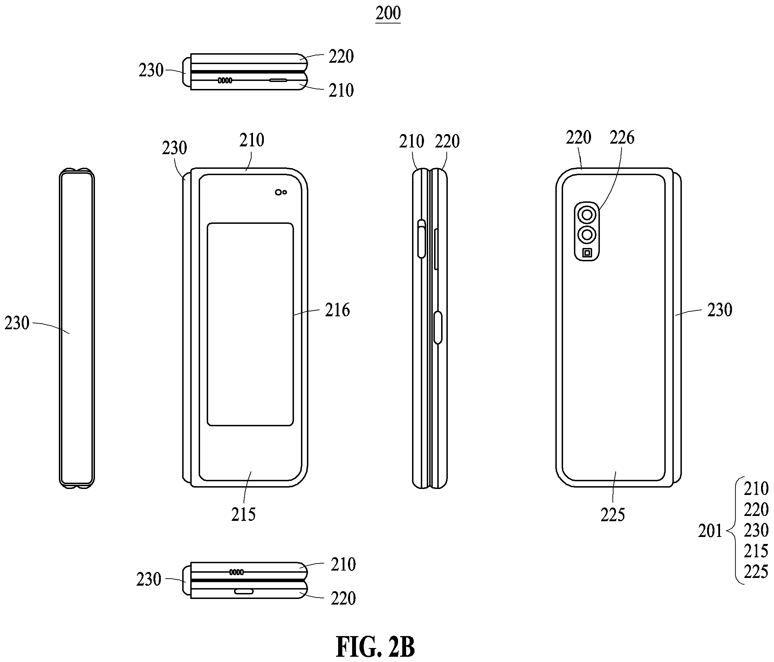

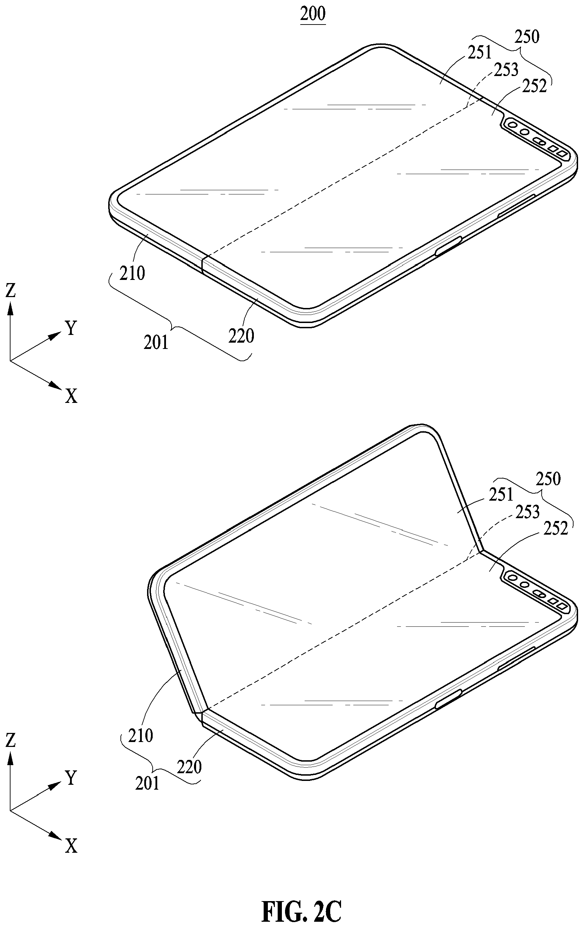

FIG. 2A is a diagram illustrating an unfolded state of an electronic device 200, according to an embodiment. FIG. 2B is a diagram illustrating a folded state of the electronic device 200, according to an embodiment. FIG. 2C is a perspective view illustrating an example of a fully unfolded state or a partially unfolded, intermediate state of the electronic device 200, according to an embodiment.

The electronic device 200 of FIGS. 2A to 2C is an example of the electronic device 101 of FIG. 1 and may be a foldable or bendable electronic device.

Illustrated in FIG. 2C and other following drawings is a spatial coordinate system defined by an X-axis, a Y-axis, and a Z-axis that are orthogonal to each other. Here, the X-axis may represent a width direction of an electronic device, the Y-axis may represent a length direction of the electronic device, and the Z-axis may represent a height (or thickness) direction of the electronic device. In the following description, a "first direction" may refer to a direction parallel to the Z-axis.

Referring to FIGS. 2A and 2B, in one embodiment, the electronic device 200 may include a foldable housing 201, and a flexible or foldable display 250 (hereinafter, the "display" 250 in short) (e.g., the display module 160 of FIG. 1) in a space formed by the foldable housing 201. A surface on which the display 250 is (or a surface on which the display 250 is viewed from an outside of the electronic device 200) may be defined as a front surface of the electronic device 200. In addition, a surface opposite to the front surface may be defined as a rear surface of the electronic device 200. In addition, a surface surrounding a space between the front surface and the rear surface may be defined as a side surface of the electronic device 200.

According to an embodiment, the foldable housing 201 may include a first housing structure 210, a second housing structure 220 including a sensor area 222, a first rear cover 215, a second rear cover 225, and a hinge structure 230. Here, the hinge structure 230 may include a hinge cover that covers a foldable portion of the foldable housing 201. The foldable housing 201 of the electronic device 200 is not limited to the shape and combination shown in FIGS. 2A and 2B and may be implemented in a different shape or a different combination of components. For example, in one embodiment, the first housing structure 210 and the first rear cover 215 may be integrally formed, and the second housing structure 220 and the second rear cover 225 may be integrally formed.

According to an embodiment, the first housing structure 210 may be connected to the hinge structure 230 and may include a first surface facing a first direction, and a second surface facing a second direction opposite to the first direction. The second housing structure 220 may be connected to the hinge structure 230 and may include a third surface facing a third direction and a fourth surface facing a fourth direction opposite to the third direction. The second housing structure 220 may rotate with respect to the first housing structure 210 about the hinge structure 230. A state of the electronic device 200 may be changed to a folded state or an unfolded state.

According to an embodiment, the first surface may face the third surface in a state in which the electronic device 200 is fully folded, and the third direction may be identical to the first direction in a state in which the electronic device 200 is fully unfolded.

According to an embodiment, the first housing structure 210 and the second housing structure 220 may be disposed on both sides of a folding axis A and may generally be symmetrical with respect to the folding axis A. As to be described hereinafter, an angle or distance between the first housing structure 210 and the second housing structure 220 may vary depending on whether the electronic device 200 is in the unfolded state, the folded state, or an intermediate state (e.g., a partially folded state or a partially unfolded state). According to an embodiment, unlike the first housing structure 210, the second housing structure 220 may additionally include the sensor area 222, in which various sensors are arranged; however, the first housing structure 210 and the second housing structure 220 may have shapes symmetrical to each other in areas other than the sensor area 222.

According to an embodiment, as shown in FIG. 2A, the first housing structure 210 and the second housing structure 220 may together form a recess for accommodating the display 250. According to an embodiment, due to the sensor area 222, the recess may have at least two different widths in a direction perpendicular to the folding axis A. For example, the recess may have a first width w1 between a first portion 210a of the first housing structure 210 parallel to the folding axis A and a first portion 220a of the second housing structure 220 formed on a periphery of the sensor area 222, and a second width w2 formed by a second portion 210b of the first housing structure 210 and a second portion 220b of the second housing structure 220 not corresponding to the sensor area 222 and being parallel to the folding axis A. In this case, the second width w2 may be greater than the first width w1. According to an embodiment, the first portion 220a and the second portion 220b of the second housing structure 220 may be at different distances from the folding axis A. The widths of the recess are not limited to the shown example. According to an embodiment, the recess may have a plurality of widths due to the shape of the sensor area 222 or asymmetrical portions of the first housing structure 210 and the second housing structure 220. According to an embodiment, the sensor area 222 may be formed to have a predetermined area adjacent to one corner of the second housing structure 220. However, the arrangement, shape, and size of the sensor area 222 are not limited to the shown example. For example, in one embodiment, the sensor area 222 may be provided at another corner of the second housing structure 220 or in a predetermined area between an upper corner and a lower corner. In one embodiment, components embedded in the electronic device 200 to perform various functions may be exposed to the front surface of the electronic device 200 through the sensor area 222 or through one or more openings provided in the sensor area 222. In one embodiment, the components may include various types of sensors. The sensors may include, for example, at least one of a front camera, a receiver, or a proximity sensor. According to an embodiment, the sensor area 222 may not be included in the second housing structure 220 or may be formed at a position different from that shown in the drawings.

According to an embodiment, at least a portion of the first housing structure 210 and the second housing structure 220 may be formed of a metal material or a non-metal material having a selected magnitude of rigidity to support the display 250. At least a portion of the first housing structure 210 and the second housing structure 220 formed of the metal material may provide a ground plane for the electronic device 200 and may be electrically connected to a ground line formed on a PCB in the foldable housing 201.

According to an embodiment, the first rear cover 215 may be on one side of the folding axis A on the rear surface of the electronic device 200, and may have, for example, a substantially rectangular periphery that may be enclosed by the first housing structure 210. Similarly, the second rear cover 225 may be on another side of the folding axis A on the rear surface of the electronic device 200 and may have a periphery that may be enclosed by the second housing structure 220.

According to an embodiment, the first rear cover 215 and the second rear cover 225 may be substantially symmetrical with respect to the folding axis A. However, the first rear cover 215 and the second rear cover 225 are not necessarily mutually symmetrical. For example, the electronic device 200 may include the first rear cover 215 and the second rear cover 225 in various shapes. In one embodiment, the first rear cover 215 may be formed integrally with the first housing structure 210, and the second rear cover 225 may be formed integrally with the second housing structure 220.

According to an embodiment, the first rear cover 215, the second rear cover 225, the first housing structure 210, and the second housing structure 220 may form a space in which various components (e.g., a PCB, or a battery) of the electronic device 200 are to be arranged. According to an embodiment, one or more components may be disposed or visually exposed on the rear surface of the electronic device 200. For example, at least a portion of a sub-display may be visually exposed through a first rear area 216 of the first rear cover 215. In one embodiment, one or more components or sensors may be visually exposed through a second rear area 226 of the second rear cover 225. In one embodiment, the sensors may include a proximity sensor and/or a rear camera.

According to an embodiment, a front camera exposed to the front surface of the electronic device 200 through one or more openings provided in the sensor area 222, or a rear camera exposed through the second rear area 226 of the second rear cover 225, may include one or more lenses, an image sensor, and/or an ISP. A flash may include, for example, a light emitting diode (LED) or a xenon lamp. In some embodiments, two or more lenses (e.g., infrared camera, wide-angle, and telephoto lenses) and image sensors may be arranged on one surface of the electronic device 200.

Referring to FIG. 2B, the hinge cover may be between the first housing structure 210 and the second housing structure 220 to cover internal components (e.g., the hinge structure 230). According to an embodiment, the hinge structure 230 may be covered by a portion of the first housing structure 210 and a portion of the second housing structure 220, or may be exposed to the outside, depending on the state (e.g., the unfolded state, the intermediate state, or the folded state) of the electronic device 200.

In an example, when the electronic device 200 is in the unfolded state (e.g., a fully unfolded state) as illustrated in FIG. 2A, the hinge structure 230 may be covered by the first housing structure 210 and the second housing structure 220 not to be exposed. In another example, when the electronic device 200 is in the folded state (e.g., a fully folded state), as shown in FIG. 2B, the hinge structure 230 may be exposed to the outside between the first housing structure 210 and the second housing structure 220. In another example, when the first housing structure 210 and the second housing structure 220 are in an intermediate state of being folded with a predetermined angle, at least a portion of the hinge cover 230 may be exposed to the outside between the first housing structure 210 and the second housing structure 220. In this example, an exposed area may be less than an area exposed in the fully folded state. In one embodiment, the hinge cover 230 may have a curved surface.

According to an embodiment, the display 250 may be in a space formed by the foldable housing 201. For example, the display 250 may be seated on the recess formed by the foldable housing 201 and may be viewed from the outside through the front surface of the electronic device 200. For example, the display 250 may constitute most of the front surface of the electronic device 200. Accordingly, the front surface of the electronic device 200 may include the display 250, and a partial area of the first housing structure 210 and a partial area of the second housing structure 220, which are adjacent to the display 250. In addition, the rear surface of the electronic device 200 may include the first rear cover 215, a partial area of the first housing structure 210 adjacent to the first rear cover 215, the second rear cover 225, and a partial area of the second housing structure 220 adjacent to the second rear cover 225.

According to an embodiment, the display 250 may refer to a display having at least a partial area that is transformable into a flat surface or a curved surface. According to an embodiment, the display 250 may include a folding area 253, a first area 251 on one side of the folding area 253 (e.g., on the left side of the folding area 253 shown in FIG. 2A), and a second area 252 on the other side of the folding area 253 (e.g., on the right side of the folding area 253 shown in FIG. 2A).

However, such an area division of the display 250 shown in FIG. 2A is merely an example, and the display 250 may be divided into a plurality of areas (e.g., four or more areas, or two areas) depending on a structure or functions thereof. In an example, as shown in FIG. 2A, the display 250 may be divided into areas based on the folding area 203 extending in parallel to the folding axis A. In another example, the display 250 may be divided into areas based on another folding axis (e.g., a folding axis parallel to a width direction of an electronic device).

According to an embodiment, the display 250 may be coupled to or disposed adjacent to a touch panel including a touch sensing circuit and a pressure sensor for measuring a strength (a pressure) of a touch. For example, the display 250 may be coupled to or disposed adjacent to a touch panel for detecting a stylus pen of an electromagnetic resonance (EMR) type, as an example of the touch panel.

According to an embodiment, the first area 251 and the second area 252 may have globally symmetrical shapes around the folding area 253. However, unlike the first area 251, the second area 252 may include a notch that is cut depending on a presence of the sensor area 222 but may have a shape symmetrical to the first area 251 in the other areas. For example, the first area 251 and the second area 252 may include portions having mutually symmetrical shapes and portions having mutually asymmetrical shapes.

According to an embodiment, an edge thickness of each of the first area 251 and the second area 252 may be different from an edge thickness of the folding area 253. The edge thickness of the folding area 253 may be less than those of the first area 251 and the second area 252. For example, the first area 251 and the second area 252 may be asymmetrical in terms of the thickness when viewed in a cross section thereof. For example, an edge of the first area 251 may be formed to have a first radius of curvature, and an edge of the second area 252 may be formed to have a second radius of curvature different from the first radius of curvature. In another example, the first area 251 and the second area 252 may be symmetrical in terms of the thickness when viewed in the cross section thereof.

Hereinafter, each area of the display 250 and operations of the first housing structure 210 and the second housing structure 220, depending on the state (e.g., the folded state, the unfolded state, or the intermediate state) of the electronic device 200, are described.

According to an embodiment, when the electronic device 200 is in the unfolded state (e.g., FIG. 2A), the first housing structure 210 and the second housing structure 220 may be arranged to face the same direction while forming an angle of 180 degrees. The surface of the first area 251 of the display 250 and the surface of the second area 252 thereof may face the same direction (e.g., a front direction of an electronic device) while forming 180 degrees. The folding area 253 may form the same plane in conjunction with the first area 251 and the second area 252.

According to an embodiment, when the electronic device 200 is in the folded state (e.g., FIG. 2B), the first housing structure 210 and the second housing structure 220 may be arranged to face each other. The surface of the first area 251 and the surface of the second area 252 of the display 250 may face each other, forming a narrow angle (e.g., between 0 degrees to 10 degrees). At least a portion of the folding area 253 may form a curved surface having a predetermined curvature.

According to an embodiment, when the electronic device 200 is in the intermediate state, the first housing structure 210 and the second housing structure 220 may be arranged to form a predetermined angle therebetween. The surface of the first area 251 and the surface of the second area 252 of the display 250 may form an angle greater than that in the folded state and smaller than that in the unfolded state. At least a portion of the folding area 253 may include a curved surface having a predetermined curvature, and the curvature may be smaller than that in the folded state.

An upper part of FIG. 2C illustrates a state in which the electronic device 200 is fully unfolded, and a lower part of FIG. 2C illustrates an intermediate state in which the electronic device 200 is partially unfolded. As described above, the state of the electronic device 200 may be changed to the folded state or the unfolded state. According to an embodiment, when viewed in a direction of a folding axis (e.g., the folding axis A of FIG. 2A), the electronic device 200 may be folded in two types, i.e., an "in-folding" type in which the front surface of the electronic device 200 is folded to form an acute angle, and an "out-folding" type in which the front surface of the electronic device 200 is folded to form an obtuse angle. In an example, in the state in which the electronic device 200 is folded in the in-folding type, the first surface of the first housing structure 210 may face the third surface of the second housing structure 220. In the fully unfolded state, the first surface of the first housing structure 210 and the third surface of the second housing structure 220 may face the same direction (e.g., a direction parallel to the z-axis).

In another example, when the electronic device 200 is folded in the out-folding type, the second surface of the first housing structure 210 may face the fourth surface of the second housing structure 220.

In addition, although not shown in the drawings, the electronic device 200 may include a plurality of hinge axes (e.g., two parallel hinge axes including the folding axis A of FIG. 2A and another axis parallel to the folding axis A). In this example, the electronic device 200 may also be folded in a "multi-folding" type in which the in-folding type and the out-folding type are combined.

The in-folding type may refer to a state in which the display 250 is not exposed to the outside in the fully folded state. The out-folding type may refer to a state in which the display 250 is exposed to the outside in the fully folded state. The lower part of FIG. 2C shows the intermediate state in which the electronic device 200 is partially unfolded in an in-folding process.

Although the state in which the electronic device 200 is folded in the in-folding type will be described below for convenience's sake, it should be noted that the description may be similarly applied in the state in which the electronic device 200 is folded in the out-folding type.

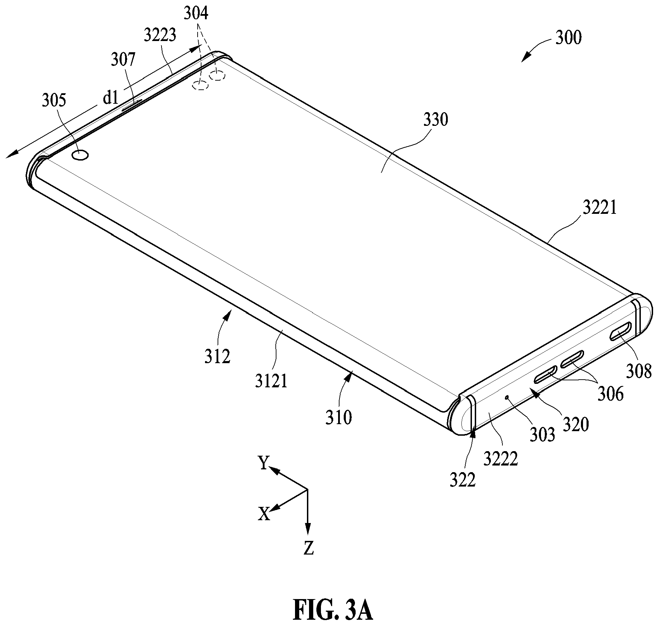

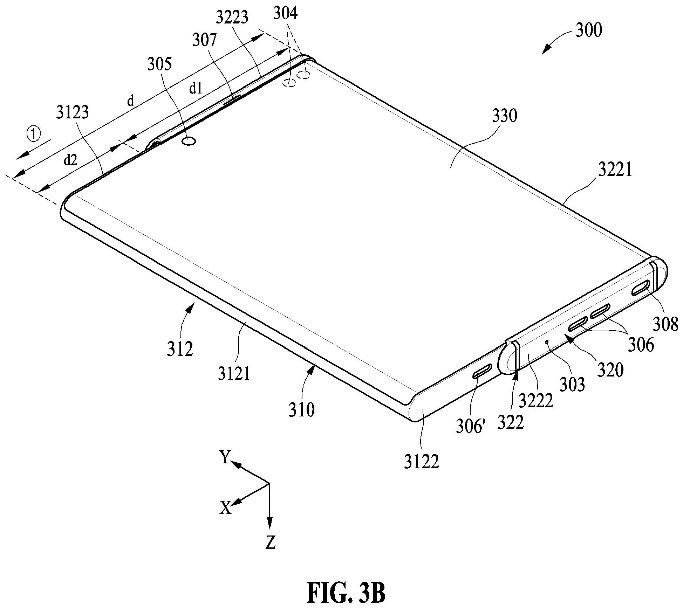

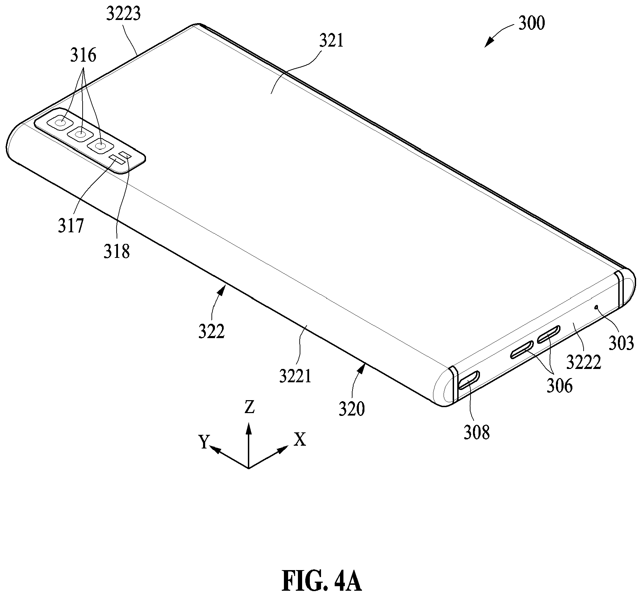

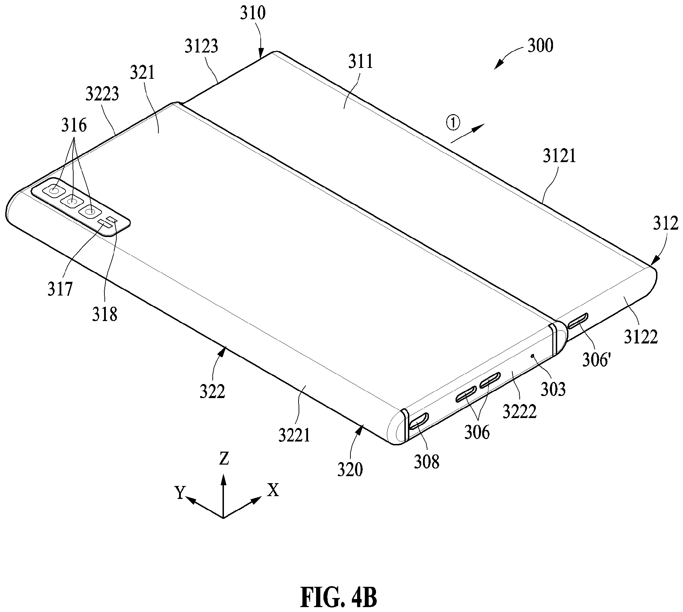

FIGS. 3A and 3B are front perspective views illustrating an electronic device 300 in a closed state and an open state, according to an embodiment. FIGS. 4A and 4B are rear perspective views illustrating the electronic device 300 in a closed state and an open state, according to an embodiment.

The electronic device 300 of FIG. 3A may be at least partially similar to the electronic device 101 of FIG. 1 or may further include other embodiments of an electronic device.

Referring to FIGS. 3A to 4B, the electronic device 300 may include a first housing 310 and a second housing 320 that is at least partially movably coupled to the first housing 310. According to an embodiment, the first housing 310 may include a first plate 311 and a first side frame 312 that extends in a substantially vertical direction (e.g., a z-axis direction) along an edge of the first plate 311. According to an embodiment, the first side frame 312 may include a first side surface 3121, a second side surface 3122 extending from one edge of the first side surface 3121, and a third side surface 3123 extending from the other edge of the first side surface 3121. According to an embodiment, the first housing 310 may include a first space that is at least partially closed from the outside by the first plate 311 and the first side frame 312.

According to an embodiment, the second housing 320 may include a second plate 321, and a second side frame 322 that extends in a substantially vertical direction (e.g., the z-axis direction) along an edge of the second plate 321. According to an embodiment, the second side frame 322 may include a fourth side surface 3221 facing away from the first side surface 3121, a fifth side surface 3222 extending from one end of the fourth side surface 3221 and at least partially coupled to the second side surface 3122, and a sixth side surface 3223 extending from the other end of the fourth side surface 3221 and at least partially coupled to the third side surface 3123. In one embodiment, the fourth side surface 3221 may extend from a structure other than the second plate 321 and may also be coupled to the second plate 321. According to an embodiment, the second housing 320 may include a second space that is at least partially closed from the outside by the second plate 321 and the second side frame 322. According to an embodiment, the first plate 311 and the second plate 321 may be arranged to at least partially form a rear surface of the electronic device 300. For example, the first plate 311, the second plate 321, the first side frame 312, and the second side frame 322 may be formed of, for example, a polymer, coated or colored glass, ceramic, metal (e.g., aluminum, stainless steel (STS), or magnesium), or a combination of two or more of the above materials.

According to an embodiment, the electronic device 300 may include a flexible display 330 arranged to be supported by the first housing 310 and the second housing 320. According to an embodiment, the flexible display 330 may include a flat portion supported by the second housing 320, and a bendable portion extending from the flat portion and supported by the first housing 310. According to an embodiment, the bendable portion of the flexible display 330 may be arranged in the first space of the first housing 310 not to be exposed to the outside when the electronic device 300 is closed and may be exposed to the outside to extend from the flat portion while being supported by the first housing 310 when the electronic device 300 is open. Accordingly, the electronic device 300 may be a rollable electronic device in which a display screen of the flexible display 330 expands in response to an open operation according to a movement of the first housing 310 from the second housing 320.

According to an embodiment, in the electronic device 300, the first housing 310 may be at least partially inserted into the second space of the second housing 320 and may be coupled to be movable in direction ①. For example, in the closed state, the electronic device 300 may be maintained in a state in which the first housing 310 and the second housing 320 are coupled such that a distance between the first side surface 3121 and the fourth side surface 3221 is a first distance d1. According to an embodiment, in the open state, the electronic device 300 may be maintained in a state in which the first housing 310 protrudes from the second housing 320 to have a second interval distance d in which the first side surface 3121 protrudes from the fourth side surface 3221 by a predetermined distance d2. According to an embodiment, the flexible display 330 may be supported by the first housing 310 and/or the second housing 320 such that both ends thereof have curved edges, in the open state.

According to an embodiment, the electronic device 300 may automatically transition between the open state and the closed state by a driving unit in the first space and/or the second space. For example, a processor (e.g., the processor 120 of FIG. 1) of the electronic device 300 may be configured to control an operation of the first housing 310 using the driving unit when an event for a transition between the open state and the closed state of the electronic device 300 is detected. In one embodiment, the first housing 310 may manually protrude from the second housing 320 through a user's manipulation. In this case, the first housing 310 may protrude by a protrusion amount desired by the user, and thus, display sizes of a screen of the flexible display 330 may vary. Accordingly, the processor (e.g., the processor 120 of FIG. 1) of the electronic device 300 may display an object in various ways corresponding to a display area corresponding to a predetermined protrusion amount of the first housing 310 and may control execution of an application program.

According to an embodiment, the flexible display 330 may be divided into a plurality of areas in an open state. For example, the display may include a first area and a second area, in which the first area is within a distance less than or equal to the second distance d2 from the first side surface 3121 and the second area is within a distance less than or equal to the first distance d1 from the fourth side surface 3221.

According to an embodiment, the electronic device 300 may include at least one of an input device 303, sound output devices 306 and 307, sensor modules 304 and 317, camera modules 305 and 316, a connector port 308, a key input device (not shown), or an indicator (not shown). In one embodiment, at least one of the components described above of the electronic device 300 may be omitted, or the electronic device 300 may further include other components.

According to an embodiment, the input device 303 may include a microphone 303. In one embodiment, the input device 303 may include a plurality of microphones 303 arranged to sense a direction of sound. The sound output device 306 and 307 may include speakers 306 and 307. The speakers 306 and 307 may include an external speaker 306 and a phone call receiver 307. In an example embodiment, when an external speaker 306' is arranged in the first housing 310, sound may be output through a hole of speaker 306 formed in the second housing 320 in the closed state. According to an embodiment, the microphone 303 and the connector port 308 may also be formed to have substantially the same configuration. In one embodiment, the sound output devices 306 and 307 may include a speaker (e.g., a piezo speaker) that operates without a separate speaker hole 306.

According to an embodiment, the sensor modules 304 and 317 may generate an electrical signal or a data value corresponding to an internal operating state of the electronic device 300 or an external environmental state. The sensor modules 304 and 317 may include, for example, a first sensor module 304 (e.g., a proximity sensor or an illuminance sensor) disposed on a front surface of the second housing 320, and/or a second sensor module 317 (e.g., a heart rate monitoring (HRM) sensor) disposed on a rear surface of the second housing 320. According to an embodiment, the first sensor module 304 may be disposed below the flexible display 330 in the second housing 320. According to an embodiment, the first sensor module 304 may further include at least one of a proximity sensor, an illuminance sensor, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an IR sensor, a biometric sensor, a temperature sensor, or a humidity sensor.

According to an embodiment, the camera devices 305 and 316 may include a first camera device 305 disposed on the front surface of the second housing 320 of the electronic device 300, and a second camera device 316 disposed on the rear surface of the second housing 320. According to an embodiment, the electronic device 300 may include a flash 318 located near the second camera device 316. According to an embodiment, the camera devices 305 and 316 may include one or more lenses, an image sensor, and/or an ISP. According to an embodiment, the first camera device 305 may be disposed under the flexible display 330 and may be configured to capture an object through a portion of an active area of the flexible display 330. According to an embodiment, the flash 318 may include, for example, a light-emitting diode (LED) or a xenon lamp. In one embodiment, two or more lenses (e.g., a wide-angle lens and a telephoto lens) and image sensors may be disposed on one surface of the electronic device 300.

According to an embodiment, the electronic device 300 may include at least one antenna (not shown). According to an embodiment, the at least one antenna may wirelessly communicate with an external electronic device (e.g., the electronic device 104 of FIG. 1), or may wirelessly transmit and receive power required for charging. According to an embodiment, the antenna may include a legacy antenna, a mmWave antenna, a near field communication (NFC) antenna, a wireless charging antenna, and/or a magnetic secure transmission (MST) antenna. According to an embodiment, an antenna structure may be formed through at least a portion of the first side frame 312 and/or the second side frame 322, which are formed of metal.

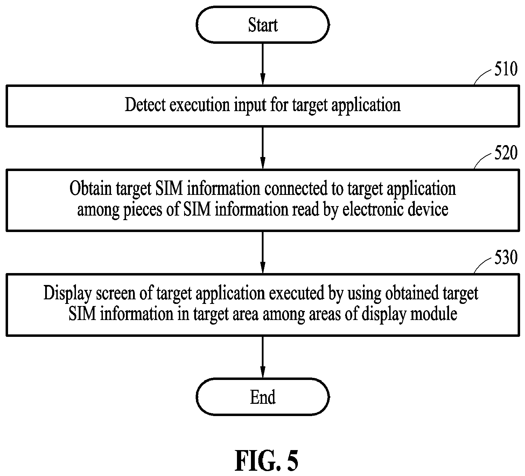

FIG. 5 is a flowchart illustrating an operation of displaying a screen of a target application of an electronic device, according to an embodiment.

In operation 510, a processor may detect an execution input for the target application. The target application may be an application to be executed by the electronic device among applications stored in the electronic device.

According to an embodiment, a display module may display a screen including graphic objects respectively for the applications stored in the electronic device. The processor may detect an execution input by a user. For example, when the display module is implemented as a touch display, the execution input may be a touch input for a graphic display. The processor may determine the target application based on a graphic object corresponding to a position at which the execution input is detected. For example, when detecting an execution input at a position where a graphic object corresponding to an application is displayed, the processor may determine the application to be the target application.

Although not explicitly illustrated in FIG. 5, the processor may determine whether the target application is an application executed by using SIM information or an application executed independently of the SIM information.

According to an embodiment, the electronic device may be implemented to support at least one of a physical SIM (pSIM) and an embedded SIM (eSIM). For example, the electronic device may be implemented to include a slot for accommodating a pSIM. The electronic device may execute an application by using SIM information read from the pSIM. For example, the electronic device may include an eSIM. The electronic device may execute an application by using SIM information read from the eSIM.

When determining the target application to be an application executed by using SIM information, the processor may obtain target SIM information to be used to execute the target application and execute the target application by using the target SIM information. Alternatively, when determining the target application to be an application executed independently of SIM information, the processor may execute the target application without obtaining the target SIM information because no SIM information is used to execute the target application.

Hereinafter, an operation when the target application is an application executed by using SIM information is described.

In operation 520, when detecting the execution input for the target application, the processor may obtain the target SIM information among pieces of SIM information read by the electronic device. The target SIM information may be SIM information connected to the target application and used to execute the target application.

According to an embodiment, the processor may select the target SIM information based on connection information between an application and SIM information. The connection information between an application and SIM information may include SIM information usable for executing each application stored in the electronic device.

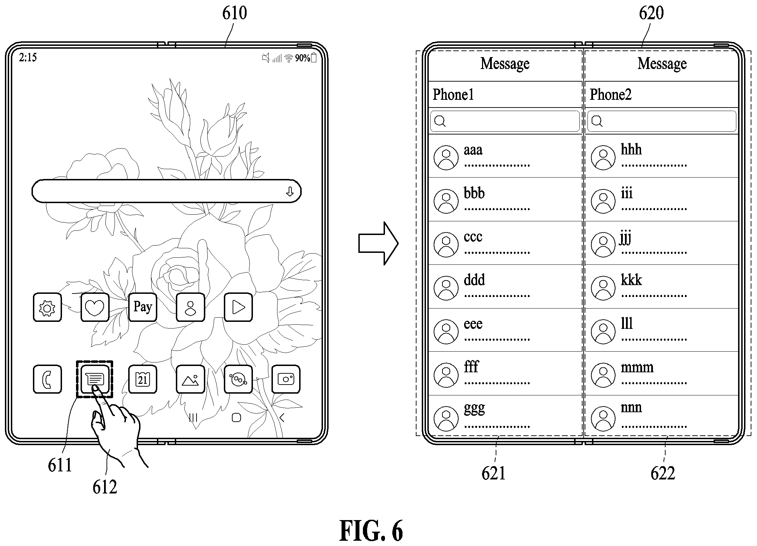

As described below with reference to FIG. 6, when pieces of SIM information are connected to the target application, the processor may obtain all the pieces of SIM information connected to the target application as the target SIM information. Alternatively, when the pieces of SIM information are connected to the target application, the processor may obtain a piece of SIM information selected from among the pieces of SIM information as the target SIM information.

According to an embodiment, the processor may select SIM information corresponding to an area including a position at which an execution input is detected as the target SIM information. For example, the display module may include a plurality of areas. When detecting the execution input for the target application, the processor may select the target SIM information based on the area including the position at which the execution input is detected. For example, a first area of the display module may correspond to first SIM information, and a second area of the display module may correspond to second SIM information. When detecting the execution input for the target application in the first area, the processor may select the first SIM information as the target SIM information. When detecting the execution input for the target application in the second area, the processor may select the second SIM information as the target SIM information.

In operation 530, the processor may display the screen of the target application executed by using the target SIM information in a target area among the areas of the display module. The target area may be an area corresponding to the obtained target SIM information. According to an embodiment, the screen of the target application may include a graphic display representing the target SIM information used to execute the target application in the target area.

According to an embodiment, the electronic device may provide the user with an interface where the target SIM information used to execute the target application may be determined based on the area where the screen of the target application is displayed. For example, the first area of the display module may correspond to the first SIM information and the second area of the display module may correspond to the second SIM information. The user may determine that a screen is obtained by executing the target application by using the first SIM information based on the screen of the target application being displayed in the first area. Similarly, the user may determine that a screen is obtained by executing the target application by using the second SIM information based on the screen of the target application being displayed in the second area.

FIG. 6 is a diagram illustrating an operation of displaying a screen of a target application executed by using pieces of target SIM information of an electronic device, according to an embodiment.

According to an embodiment, the shape of the electronic device may be changeable. The electronic device of which the shape is changeable may determine an area to be activated among a plurality of areas (e.g., a first area, a second area, and a third area) of a display module according to the shape of the electronic device. When the shape of the electronic device is a first shape, the electronic device may activate the first area and the second area. When the shape of the electronic device is a second shape, the electronic device may activate the third area. For example, the electronic device may be an electronic device of a foldable type including a foldable display in a space formed by a foldable housing. The first shape may be the shape of the electronic device in an unfolded state and the second shape may be the shape of the electronic device in a folded state. When the electronic device is an in-folding foldable type, the first area and the second area may include a screen area (e.g., a screen area of a main display) displayed in the unfolded state of the electronic device, and the third area may be a screen area (e.g., a screen area of a sub-display) displayed in the folded state of the electronic device.

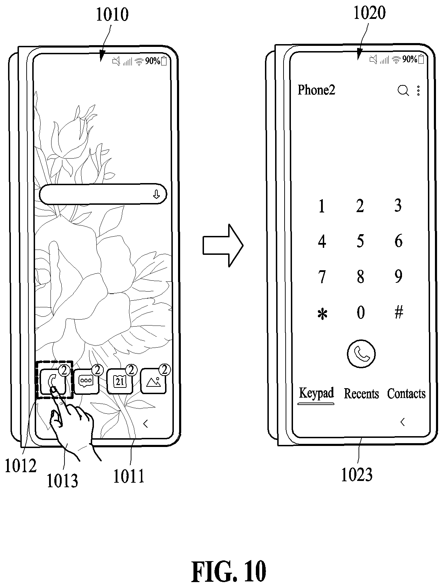

When the shape of the electronic device is the shape (e.g., the first shape) of the electronic device in the unfolded state, the processor may display a home screen for pieces of SIM information. According to an embodiment, when the shape of the electronic device is the shape (e.g., the first shape) of the electronic device in the unfolded state of the electronic device, the processor may determine to display one home screen in the areas of the display module. The operation of displaying a home screen when the shape of the electronic device is the second shape in the folded state is described below with reference to FIG. 10.

As illustrated in FIG. 6, on a screen 610, the processor may display the home screen for detecting an execution input for an application stored in the electronic device. The processor may detect an execution input 612 at which a graphic object 611 is displayed on the home screen. The processor may determine a message application corresponding to the graphic object 611 to be the target application.

When detecting the execution input 612 for the message application, that is, the target application, on the screen 610, the processor may select target SIM information based on connection information between an application and SIM information. For example, based on the connection information, the processor may obtain pieces of SIM information (e.g., first SIM information and second SIM information) connected to the message application as pieces of target SIM information.

When obtaining the pieces of target SIM information connected to the target application, the processor may display the screen of the target application by using the pieces of target SIM information in target areas respectively corresponding to the pieces of target SIM information. For example, on a screen 620, a first area 621 of the display module may correspond to the first SIM information and a second area 622 of the display module may correspond to the second SIM information. The processor may display a screen of the message application executed by using the first SIM information in the first area 621 and display a screen of the message application executed by using the second SIM information in the second area 622.

Although not explicitly illustrated in FIG. 6, according to an embodiment, when a piece of content corresponds to at least two pieces of SIM information, the processor may display the content on a screen corresponding to one of the at least two pieces of SIM information. A screen corresponding to SIM information may include a screen of an application executed by using the SIM information. For example, when a piece of content corresponds to at least two pieces of SIM information, the processor may select SIM information of the content from among the at least two pieces of SIM information. The processor may display the content on the screen of the target application executed by using the selected SIM information. The processor may exclude the content from the screen of the target application executed by using a different piece of SIM information from the selected SIM information.

For example, the processor may display a safety notification message on a screen corresponding to the first SIM information when the safety notification message corresponds to the first SIM information and the second SIM information. The processor may exclude the safety notification message from a screen corresponding to the second SIM information.

According to an embodiment, when a piece of content corresponds to pieces of SIM information, the electronic device may not display the content multiple times on screens respectively corresponding to the pieces of SIM information. Instead, the electronic device may display the content on a screen corresponding to a piece of SIM information and exclude the content from screens respectively corresponding to the pieces of SIM information that are different from the piece of SIM information. Accordingly, the electronic device may provide a user with an effective interface, which does not unnecessarily provide the user with the same content repeatedly, by displaying a piece of content on a screen corresponding to a maximum of a piece of SIM information.

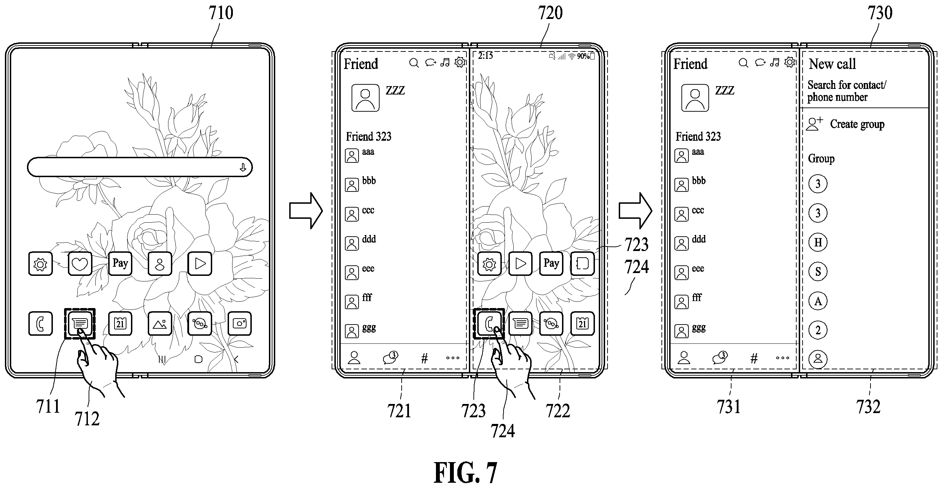

FIG. 7 is a diagram illustrating an operation of displaying a screen of a target application and a screen of another application of an electronic device, according to an embodiment.

In FIG. 7, for example, first areas 721 and 731 of a display module may correspond to first SIM information and second areas 722 and 732 may correspond to second SIM information. An instant messaging application may be connected to the first SIM information without being connected to the second SIM information. In other words, the first SIM information may be used to execute the instant messaging application, and the second SIM information may not be used to execute the instant messaging application. A call application may be connected to the second SIM information without being connected to the first SIM information. In other words, the first SIM information may not be used to execute the call application, and the second SIM information may be used to execute the call application.

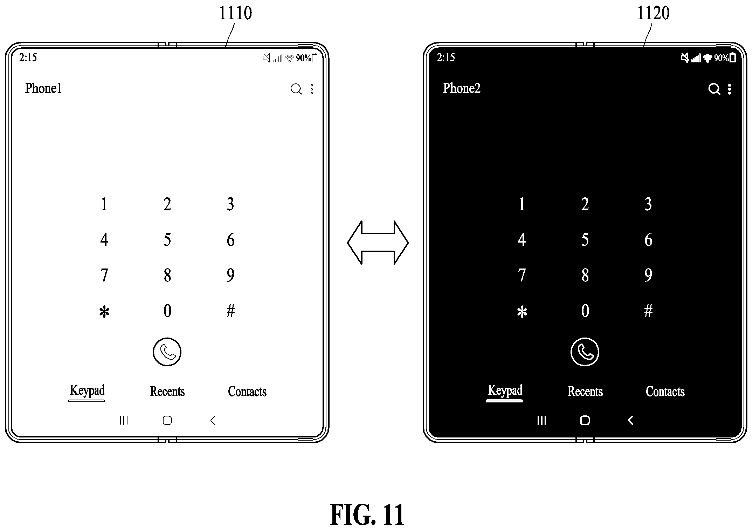

When the shape of the electronic device is the shape (e.g., the first shape) of the electronic device in an unfolded state, a processor may display a home screen for pieces of SIM information. According to an embodiment, when the shape of the electronic device is the shape (e.g., a first shape) of the electronic device in the unfolded state of the electronic device, the processor may determine to display the home screen in areas respectively corresponding to pieces of SIM information. An operation of displaying a home screen when the shape of the electronic device is a second shape in a folded state is described below with reference to FIG. 11.

As illustrated in FIG. 7, on a screen 710, the processor may display the home screen for detecting an execution input for an application stored in the electronic device. The processor may detect an execution input 712 at which a graphic object 711 is displayed on the home screen. The processor may determine an instant messaging application corresponding to the graphic object 711 to be the target application.

When detecting the execution input 712 for the instant messaging application on the screen 710, the processor may obtain the first SIM information connected to the instant messaging application as target SIM information based on connection information. The processor may display a screen of the instant messaging application executed by using the first SIM information in the first area 721.

The processor may display the home screen in another area on a screen 720 when there is the other area different from a target area among a plurality of areas of the display module. The home screen may include a screen for detecting an execution input for an application stored in the electronic device. The other area may be an area not corresponding to the target SIM information, which may be an area distinguished from the target area among the areas.

According to an embodiment, the processor may display the home screen on the other area when there is the other area different from the target area among activated areas of the display module. The other area may be an area not corresponding to the target SIM information among the activated areas.

Like the example illustrated above with reference to FIG. 6, the instant messaging application, that is, the target application, may be connected to the first SIM information and the second SIM information. When the electronic device of which the shape is changeable is in the first shape, a first area and a second area may be activated. The processor may determine that there is no other area different from the target area among the activated areas (e.g., the first area and the second area). The processor may omit the displaying of the home screen in the other area when there is no other area.

For example, as illustrated in FIG. 7, the instant messaging application, that is, the target application, may be connected to the first SIM information without being connected to the second SIM information. When the electronic device of which the shape is changeable is in the first shape, the first area and the second area may be activated. When there is the other area, that is, the second area 722, different from the target area among the activated areas (e.g., the first area 721 and the second area 722), the processor may display the home screen on the second area 722.

Then, the processor, on the screen 720, may detect an execution input for another application using SIM information different from the target SIM information while displaying the screen of the target application. For example, as illustrated in FIG. 7, the processor may detect an execution input 724 at a position where a graphic object 723 is displayed on the home screen displayed in the second area 722.

On a screen 730, when detecting an execution input for the other application while displaying the screen of the target application, the processor may display a screen of the other application in another area while maintaining a screen display of the target application in the target area.

According to an embodiment, when detecting an execution input for the other application while displaying the screen of the target application, the processor may determine whether to maintain the screen display of the target application in the target area according to whether there is a connection between the other application and the target SIM information.

When the other application is connected to the target SIM information, the processor may display the screen of the other application executed by using the target SIM information in the target area and the screen of the other application executed by using the other SIM information in the other area. For example, although not explicitly illustrated in FIG. 7, when detecting an execution input for the call application connected to the first SIM information and the second SIM information on the screen 720, the processor may display a screen of the call application executed by using the first SIM information in the first area and the screen of the call application executed by using the second SIM information in the second area. The processor may stop the displaying of the screen of the instant messaging application executed by using the first SIM information in the first area.

When the other application is not connected to the target SIM information, the processor may maintain the displaying of the screen of the target application executed by using the target SIM information in the target area and the displaying of the screen of the other application executed by using the other SIM information in the other area. For example, as illustrated in FIG. 7, on the screen 720, when detecting an execution input for the call application connected to the second SIM information without being connected to the first SIM information, the processor may maintain the displaying of the screen of the instant messaging application executed by using the first SIM information in the first area and the screen of the call application executed by using the second SIM information in the second area.

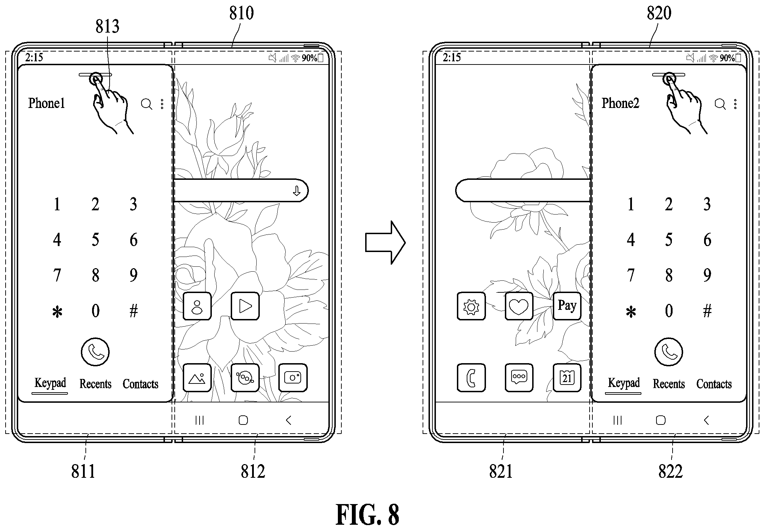

FIG. 8 is a diagram illustrating an operation of displaying a screen of a target application when detecting an input of moving the screen of the target application, according to an embodiment.

In FIG. 8, for example, first areas 811 and 821 may correspond to first SIM information and second areas 812 and 822 may correspond to second SIM information. A call application may be connected to the first SIM information and the second SIM information. In other words, the first SIM information and the second SIM information may be used to execute the call application.

According to an embodiment, the processor may display the screen of the target application executed by using target SIM information. As illustrated in FIG. 8, the processor may display a screen of the call application executed by using the first SIM information, that is, target SIM information, in the first area 811.

On a screen 810, the processor may detect an input of moving the screen of the target application to another area corresponding to another piece of SIM information. For example, the input of moving the screen of the target application from a target area to the other area may be a drag input from the target area to the other area. As illustrated in FIG. 8, an input of moving the screen of the call application displayed in the first area 811 to the second area 812 may be detected.

On a screen 820, when detecting the input of moving the screen of the target application to the other area, the processor may execute the target application by using the other piece of SIM information. The processor may display the screen of the target application executed by using the other piece of SIM information in the other area. As illustrated in FIG. 8, when detecting the input of moving the screen of the call application displayed in the first area 811 to the second area 812, the processor may execute the call application by using the second SIM information. The processor may display the screen of the call application executed by using the second SIM information in the second area.

According to an embodiment, as illustrated in FIG. 8, when displaying the screen of the target application executed by using the other piece of SIM information in the other area, the processor may stop the displaying of the screen of the target application executed by using the target SIM information in the target area.

According to an embodiment, although not explicitly illustrated in FIG. 8, when displaying the screen of the target application executed by using the other piece of SIM information in the other area, the processor may maintain the displaying of the screen of the target application executed by using the target SIM information in the target area.

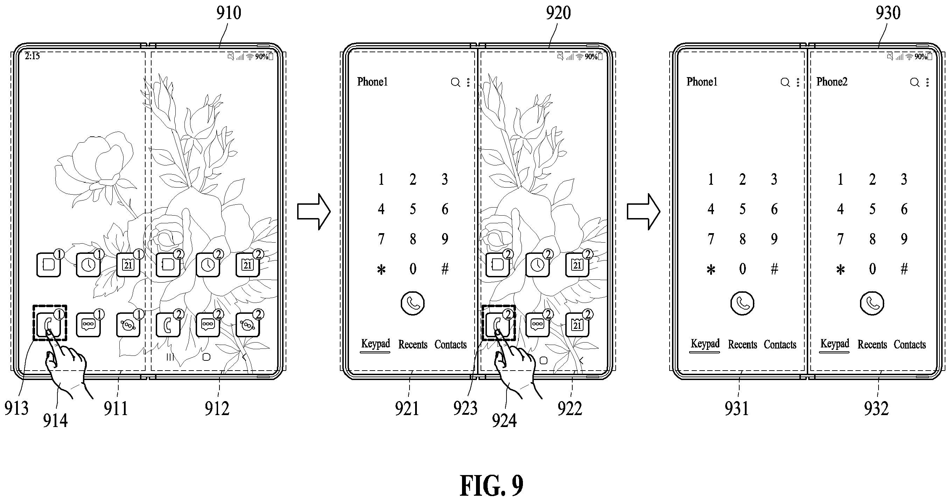

FIG. 9 is a diagram illustrating an operation of displaying a screen of a target application executed by using target SIM information selected based on an area including a position at which an execution input of an electronic device is detected, according to an embodiment.

In FIG. 9, for example, first areas 911, 921, and 931 may correspond to first SIM information and second areas 912, 922, and 932 may correspond to second SIM information. A call application may be connected to the first SIM information and the second SIM information. In other words, the first SIM information and the second SIM information may be used to execute the call application.

In areas respectively corresponding to pieces of SIM information, the processor may display a home screen for executing an application stored in the electronic device by using a SIM corresponding to the application. For example, on a screen 910, the processor may display a first home screen for executing an application by using the first SIM information in the first area 911 and a second home screen for executing an application by using the second SIM information in the second area 912.

According to an embodiment, a graphic object corresponding to SIM information may include a display indicating the SIM information corresponding to the graphic object. When detecting an execution input at a position where the graphic object corresponding to the SIM information is displayed, the processor may use the SIM information to execute an application. For example, when detecting an execution input at a position where a graphic object of the call application corresponding to the first SIM information is displayed, the processor may execute the call application by using the first SIM information. When detecting an execution input at a position where a graphic object of the call application corresponding to the second SIM information is displayed, the processor may execute the call application by using the second SIM information. For example, as illustrated in FIG. 9, graphic objects displayed in the first area 911 may be graphic objects corresponding to the first SIM information and include a display ① indicating the first SIM information, and graphic objects displayed in the second area 912 may be graphic objects corresponding to the second SIM information and include a display ② indicating the second SIM information.

According to an embodiment, when detecting an execution input, the processor may select the target SIM information based on an area including a position at which the execution input is detected. For example, the processor may select SIM information corresponding to the area including the position at which the execution input is detected as the target SIM information. When detecting the execution input for the target application in a first area, the processor may select the first SIM information as the target SIM information. When detecting the execution input for the target application in a second area, the processor may select the second SIM information as the target SIM information.

In the screen 910, the processor may detect an execution input 914 for the call application at a position where a graphic object 913 is displayed in the first area 911. The processor may select the first SIM information as the target SIM information, based on the first area 911, that is, an area including the position at which the execution input 914 is detected.

On a screen 920, the processor may execute the call application by using the first SIM information and display a screen of the call application executed by using the first SIM information in the first area 921. Then, the processor may detect an execution input 924 for the call application at a position where a graphic object 923 is displayed in the second area 922. The processor may select the second SIM information as the target SIM information, based on the second area 922, that is, an area including the position at which the execution input 924 is detected.

On a screen 930, the processor may execute the call application by using the second SIM information and display the screen of the call application executed by using the second SIM information in the second area 932. As illustrated in FIG. 9, the processor may display a screen in a second area independently of a screen displayed in a first area.

Although FIG. 9 illustrates an example of detecting an execution input for the call application in the second area while the screen of the call application is displayed in the first area, examples are not limited thereto. For example, on the screen 920, the processor may detect an execution input for an application (e.g., a message application) different from the call application. The processor may determine the second SIM information to be the target SIM information, based on the second area, that is, an area including a position at which the execution input is detected. On a screen (not shown), the processor may display the screen of the call application executed by using the first SIM information in the first area and display a screen of the message application executed by using the second SIM information in the second area.

FIG. 10 is a diagram illustrating an operation of displaying a home screen for executing an application by using representative SIM information selected from among pieces of target SIM information of an electronic device, according to an embodiment.

According to an embodiment, a processor may determine whether to display a home screen for the representative SIM information. For example, the electronic device may determine whether to display the home screen for the representative SIM information based on the shape of the electronic device when the shape of the electronic device is changeable. When the shape of the electronic device is the shape (e.g., a first shape) of the electronic device in an unfolded state, the processor may display a home screen for pieces of SIM information as described above with reference to FIGS. 6, 7, and 9.

When the shape of the electronic device is a second shape in a folded state, the processor may determine to display the home screen for the representative SIM information in a third area. In FIG. 10, when the shape of the electronic device is the shape (e.g., the second shape) of the electronic device in the folded state, the processor may determine to display the home screen for the representative SIM information in the third area.

The processor may select the representative SIM information from among pieces of SIM information read by the electronic device. For example, the processor may select SIM information that is most recently used to execute an application as the representative SIM information. For example, the processor may select the representative SIM information based on the number of uses for the execution of an application. For example, the processor may select the representative SIM information based on a user input.

On a screen 1010, the processor may display the home screen for the representative SIM information. The home screen for the representative SIM information may be a home screen for executing an application by using the representative SIM information and include a graphic object corresponding to the application using the representative SIM information. In addition, the home screen for the representative SIM information may further include a graphic object corresponding to an application independent of SIM information. The application independent of the SIM information may include an application not necessarily requiring the SIM information when executing the application. As described above, the processor may detect an execution input for an application corresponding to a graphic object at a position where the graphic object is displayed.

When detecting an execution input for the application using the representative SIM information on the home screen for the representative SIM information, the processor may execute the application by using the representative SIM information. When detecting an execution input for the application independent of the SIM information, the processor may execute the application independently of the SIM information. In other words, the processor may execute the application without using the SIM information.

As illustrated in FIG. 10, for example, the processor may display a home screen for second SIM information selected as the representative SIM information in a third area 1011. The processor may detect an execution input 1013 for a call application corresponding to a graphic object 1012 at a position where the graphic object 1012 is displayed. Because the call application may be an application using the second SIM information, the processor may execute the call application by using the second SIM information.

On a screen 1020, the processor may display a screen of a target application executed by using the representative SIM information. In FIG. 10, the processor may display a screen of the call application executed by using the second SIM information in a third area 1023.

Although FIG. 10 mainly illustrates an example of determining to display the home screen for the representative SIM information when the shape of the electronic device is the second shape in the folded state, examples are not limited to the illustrated example. For example, although not explicitly illustrated in FIG. 10, when the shape of the electronic device is the shape of the electronic device in a partially unfolded, intermediate state, the processor may determine to display the home screen for the representative SIM information in the third area. For example, SIM information that is most recently used to execute an application may be selected as the representative SIM information. For example, the representative SIM information may be selected based on the number of uses for the execution of an application. For example, the representative SIM information may be selected from among pieces of SIM information based on a user input.

FIG. 11 is a diagram illustrating an operation of displaying a screen of an application including a theme corresponding to SIM information of an electronic device, according to an embodiment.

According to an embodiment, a processor may display a screen of a target application of a theme corresponding to target SIM information used to execute the target application. The theme may include information on a color that is used for at least some of the screen. For example, in a light theme, a majority of pixels (e.g., pixels corresponding to a background) of a screen may have a color having a brightness value greater than or equal to a threshold. In a dark theme, a majority of pixels (e.g., the pixels corresponding to the background) may have a color having a brightness value less than the threshold.

For example, first SIM information may correspond to a first theme (e.g., the light theme) and second SIM information may correspond to a second theme (e.g., the dark theme).

The processor may detect an execution input for a call application. FIG. 11 illustrates respective examples of the first SIM information being obtained as the target SIM information and the second SIM information being obtained as the target SIM information.

On a screen 1110, the processor may obtain the first SIM information as the target SIM information. The processor may execute the call application, that is, the target application, by using the first SIM information. The processor may display a screen of the call application in the light theme, that is, the first theme, when displaying the screen of the call application executed by using the first SIM information.

On a screen 1120, the processor may obtain the second SIM information as the target SIM information. The processor may execute the call application, that is, the target application, by using the second SIM information. The processor may display the screen of the call application in the dark theme, that is, the second theme, when displaying the screen of the call application executed by using the second SIM information.

According to an embodiment, the electronic device may provide the user with an interface where the target SIM information used to execute the target application may be determined based on a theme in which the screen of the target application is displayed. The user may determine that a screen is obtained by executing the target application by using the first SIM information based on the screen of the target application being displayed in the first theme. Similarly, the user may determine that a screen is obtained by executing the target application by using the second SIM information based on the screen of the target application being displayed in the second theme.

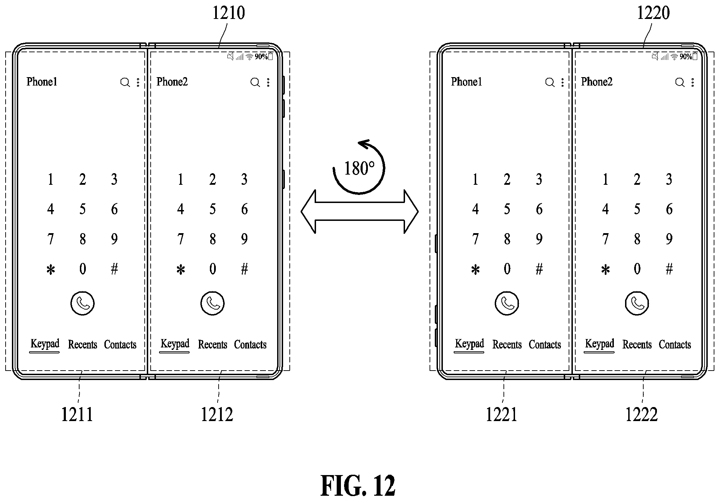

FIG. 12 is a diagram illustrating an operation of displaying a screen of a target application based on rotation of an electronic device, according to an embodiment.

According to an embodiment, a processor may determine an area in a direction corresponding to SIM information to be an area corresponding to the SIM information. For example, the direction corresponding to the SIM information may include a direction based on a user looking at a display. The processor may determine the area corresponding to the SIM information based on a rotation state of the electronic device. The processor may determine the area in the direction corresponding to the SIM information based on the user to be the area corresponding to the SIM information independently of the rotation state of the electronic device.

For example, a state of the electronic device that is placed in a predetermined direction may be defined as a reference state in which the electronic device is not rotated. A state of the electronic device that is rotated at a certain angle in a clockwise (or counterclockwise) direction from the reference state may be defined as a rotated state at the certain angle.

For example, the first SIM information may correspond to a first direction (e.g., left) of the display and the second SIM information may correspond to a second direction (e.g., right) of the display.

As illustrated in FIG. 12, an electronic device 1210 may be in a first state (e.g., the reference state) and an electronic device 1220 may be in a second state (e.g., a rotated state at 180 degrees).

For example, when the electronic device 1210 is in the first state, the processor may determine an area 1211 in the first direction (e.g., left) corresponding to the first SIM information based on the first state to be an area corresponding to the first SIM information. When the electronic device 1210 is in the first state, the processor may determine an area 1212 in the second direction (e.g., right) corresponding to the second SIM information based on the first state to be an area corresponding to the second SIM information. For example, the processor may display a screen of a call application executed by using the first SIM information in the area 1211. The processor may display the screen of the call application executed by using the second SIM information in the area 1212.

For example, when the electronic device 1220 is in the second state, the processor may determine an area 1221 in the first direction (e.g., left) corresponding to the first SIM information based on the second state to be the area corresponding to the first SIM information. When the electronic device 1220 is in the second state, the processor may determine an area 1222 in the second direction (e.g., right) corresponding to the second SIM information based on the second state to be the area corresponding to the second SIM information. For example, the processor may display the screen of the call application executed by using the first SIM information in the area 1221. The processor may display the screen of the call application executed by using the second SIM information in the area 1222.

According to an embodiment, the electronic device may consistently provide the user with an interface for determining target SIM information used to execute the target application in a direction where an area is based on the user independently of the rotation state of the electronic device, for example, when the electronic device is in the reference state or in the rotated state at 180 degrees. The user may determine that a screen is obtained by executing the target application by using the first SIM information based on the screen being displayed in an area in the first direction. Similarly, the user may determine that a screen is obtained by executing the target application by using the second SIM information based on the screen being displayed in an area in the second direction.

## Claims

1. An electronic device comprising:
a display module comprising a plurality of areas;
a memory configured to store computer-executable instructions; and
a processor configured to execute the computer-executable instructions by accessing the memory, wherein the computer-executable instructions are configured to,
when detecting an execution input for a target application, obtain target subscriber identification module (SIM) information connected to the target application among pieces of SIM information read by the electronic device, and
display a screen of the target application executed by using the obtained target SIM information in a target area corresponding to the obtained target SIM information among the areas of the display module.

2. The electronic device of claim 1, wherein
the computer-executable instructions are further configured to,
when obtaining pieces of target SIM information connected to the target application, display the screen of the target application by using the pieces of target SIM information in target areas respectively corresponding to the pieces of target SIM information.

3. The electronic device of claim 1, wherein
the computer-executable instructions are further configured to,
when a piece of content corresponds to at least two pieces of SIM information, display the content through a screen corresponding to a piece of SIM information among the at least two pieces of SIM information.

4. The electronic device of claim 1, wherein
the computer-executable instructions are further configured to,
when there is a different area from the target area among the areas, display a home screen configured to detect an execution input for an application stored in the electronic device in the different area.

5. The electronic device of claim 1, wherein
the computer-executable instructions are further configured to,
when detecting an execution input for a different application using different SIM information from the target SIM information while displaying the screen of the target application, display a screen of the different application in a different area from the target area while maintaining the displaying of the screen of the target application in the target area.

6. The electronic device of claim 1, wherein
the computer-executable instructions are further configured to,
when detecting an execution input for the target application, select the target SIM information connected to the target application from among the pieces of SIM information, based on connection information between an application and SIM information.

7. The electronic device of claim 1, wherein
the computer-executable instructions are further configured to,
when detecting an input of moving the displayed screen of the target application to another area corresponding to different SIM information, execute the target application by using the different SIM information and display the screen of the target application in the other area.

8. The electronic device of claim 1, wherein
the computer-executable instructions are further configured to,
when detecting an execution input for the target application, select the target SIM information based on an area comprising a position at which the execution input is detected.

9. The electronic device of claim 1, wherein
the computer-executable instructions are further configured to,
in areas respectively corresponding to the pieces of SIM information, display a home screen configured to execute an application stored in the electronic device by using a SIM corresponding to the application.

10. The electronic device of claim 1, wherein
the computer-executable instructions are further configured to, by using representative SIM information selected from among the pieces of SIM information, display a home screen configured to execute an application.

11. A method of operating an electronic device implemented by a processor, the method comprising:
when detecting an execution input for a target application, obtaining target SIM information connected to the target application among pieces of SIM information read by the electronic device; and
displaying a screen of the target application executed by using the obtained target SIM information in a target area corresponding to the obtained target SIM information among a plurality of areas of a display module.

12. The method of claim 11, wherein
the displaying the screen of the target application comprises:
when obtaining pieces of target SIM information connected to the target application, displaying the screen of the target application by using the pieces of target SIM information in target areas respectively corresponding to the pieces of target SIM information.

13. The method of claim 11, wherein
the displaying the screen of the target application further comprises:
when a piece of content corresponds to at least two pieces of SIM information, displaying the content through a screen corresponding to a piece of SIM information among the at least two pieces of SIM information.

14. The method of claim 11, wherein
the displaying the screen of the target application further comprises:
when there is a different area from the target area among the areas, displaying a home screen configured to detect an execution input for an application stored in the electronic device in the different area.

15. The method of claim 11, further comprising:
when detecting an execution input for a different application using different SIM information from the target SIM information while displaying the screen of the target application, displaying a screen of the different application in a different area from the target area while maintaining the displaying of the screen of the target application in the target area.

16. The method of claim 11, wherein
the obtaining the target SIM information comprises:
when detecting an execution input for the target application, selecting the target SIM information connected to the target application from among the pieces of SIM information, based on connection information between an application and SIM information.

17. The method of claim 11, further comprising:
when detecting an input of moving the displayed screen of the target application to another area corresponding to different SIM information, executing the target application by using the different SIM information and displaying the screen of the target application in the other area.

18. The method of claim 11, wherein
the obtaining the target SIM information further comprises:
when detecting an execution input for the target application, selecting the target SIM information based on an area comprising a position at which the execution input is detected.

19. The method of claim 11, further comprising:
in areas respectively corresponding to the pieces of SIM information, displaying a home screen configured to execute an application stored in the electronic device by using a SIM corresponding to the application.

20. The method of claim 11, further comprising, by using representative SIM information selected from among the pieces of SIM information, displaying a home screen configured to execute an application.
